(19) Europäisches Patentamt
European Patent Office
Office européen des brevets

(11) **EP 1 989 242 B1**

(12) **EUROPEAN PATENT SPECIFICATION**

(45) Date of publication and mention
of the grant of the patent:
**21.07.2010 Bulletin 2010/29**

(51) Int Cl.:
**C08G 18/02** *(2006.01)*      **C08G 18/48** *(2006.01)*
**C08G 18/79** *(2006.01)*      **C08G 18/22** *(2006.01)*

(21) Application number: **07703950.1**

(22) Date of filing: **17.01.2007**

(86) International application number:
**PCT/EP2007/050453**

(87) International publication number:
**WO 2007/096216 (30.08.2007 Gazette 2007/35)**

(54) **PROCESS FOR MAKING A POLYISOCYANURATE COMPOSITE**

HERSTELLUNGSVERFAHREN FÜR EINEN POLYISOCYANURATVERBUND

PROCÉDÉ SERVANT À FABRIQUER UN COMPOSITE DE POLYISOCYANURATE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.02.2006 EP 06110206**

(43) Date of publication of application:
**12.11.2008 Bulletin 2008/46**

(73) Proprietor: **HUNTSMAN INTERNATIONAL LLC Salt Lake City, Utah 84108 (US)**

(72) Inventors:
• **BLEYS, Gerhard Jozef**
  **B-3001 Heverlee (BE)**
• **HUYGENS, Eric**
  **B-3001 Heverlee (BE)**
• **ROEKAERTS, Stijn**
  **B-3211 Binkom (BE)**
• **VANDERVESSE, Marc**
  **B-3300 Tienen (BE)**
• **VERBEKE, Hans Godelieve Guido**
  **B-3210 Lubbeek (BE)**

(74) Representative: **Baken, Philippus Johannes L. H. et al**
  **Huntsman (Europe) BVBA**
  **Intellectual Property Department**
  **Everslaan 45**
  **3078 Everberg (BE)**

(56) References cited:
  **EP-A- 0 226 176**        **WO-A-2004/111101**
  **US-A1- 2002 045 690**   **US-B1- 6 509 392**

**Description**

The present invention relates to a process for making a polyisocyanurate composite which process comprises combining a polyisocyanate, a polyol and a trimerization catalyst, hereinafter collectively referred to as 'reactive binder composition', with a material, which is to be bonded, to form a reactive composite, and allowing in a next step this reactive composite to react at elevated temperature so as to form the polyisocyanurate composite. Relevant prior act is WO 2006/008780, JP 58-034832, JP 58-145431, JP 58-011529, JP 57-1331276, US 4129697, US 4126742, EP 226176 and WO 05/072188. In operating the process, we now have found that the miscibility of the ingredients of the reactive binder composition is greatly improved if a special polyol is used instead of those used in the prior art. This special polyol further ensures a faster and more complete reaction and gives a more transparent polyisocyanurate composite material, which has excellent heat and fire resistant properties. Surprisingly, while this reactive binder is relatively highly reactive, the reactive composite has low reactivity.

Therefore the present invention is concerned with a process for making a polyisocyanurate composite which process comprises combining a polyisocyanate, a polyether polyol and a trimerization catalyst, these three ingredients collectively being referred to as 'reactive binder composition', with a material which is to be bonded (hereinafter called the to-be-bonded material) to form a reactive composite, and allowing in a next step this reactive composite to react at elevated temperature, wherein the amount of the reactive binder composition is 1 - 60 % by weight and the amount of the to-be-bonded material is 40 - 99 % by weight, both calculated on the amount of the reactive binder composition plus the amount of the to-be-bonded material, and wherein the amount of the polyisocyanate and the polyol is such that the index of the reactive binder composition is 150 - 10000, characterized in that the polyol is a polyol having an average equivalent weight of 100 - 2500 and an oxyethylene content of at least 65 % by weight.

US 6509392 discloses a binder comprising a polyether polyol component, a polyisocyanate component and a trimerization catalyst. The binder is used for making foundry shapes using the no-bake process. The special polyol has not been proposed. EP 304005 discloses a process for making fiber reinforced articles using a binder comprising a polyisocyanate, a polyether polyol and a trimerization catalyst. EP 304005 does not propose the sole use of such polyols having a high oxyethylene content. The amount of reactive binder composition in the examples is more than 90 % by weight. WO 04/111101 discloses a process for preparing a polyisocyanurate polyurethane material by reacting a diphenylmethane diisocyanate (MDI) and a polyol having a high oxyethylene (EO) content and a high primary hydroxyl group content at a high index and in the presence of a trimerisation catalyst. The process is suitable to make reinforced materials by using fillers and/or fibers. Optional ingredients, like these fillers and/or fibers, in general are premixed with the isocyanate-reactive ingredients.

US 2002/0045690 discloses a process to produce reinforced polyisocyanurate matrix composites via pultrusion. A wide variety of polyols has been proposed although polyols having an oxyethylene content of about 50% have been described, composites have not been made from them.

Surprisingly it has been found that the reactive composites according to the present invention remain stable for a long time until the temperature is increased to 50 °C or higher after which curing happens very quickly. Still further it has surprisingly been found that the polyether polyol with a high oxyethylene content is able to provide within a relatively short period, under identical conditions, an exothermic reaction which ensures a temperature at which the isocyanurate reaction starts easily while an oxypropylene based polyol shows a reaction temperature profile which is insufficient in this respect and a less complete reaction. No attention has been given in WO 04/111101 to the use of such reactive composition as a binder of large amounts of to-be-bonded materials and no indication has been given as to the beneficial effects, as outlined above, which are obtained by forming reactive composites thereof.

The polyisocyanurate composites show good thermal stability, flame resistance and fire properties and a very low level of residual free NCO-groups in infra-red analysis.

In the context of the present invention the following terms have the following meaning :

1) isocyanate index or NCO index or index :
the ratio of NCO-groups over isocyanate-reactive hydrogen atoms from polyether polyols having an equivalent weight of 100 - 2500 present in a formulation, given as a percentage :

$$\frac{[\text{NCO}] \times 100}{[\text{active hydrogen}]} \quad (\%).$$

In other words the NCO-index expresses the percentage of isocyanate actually used in a formulation with respect to the amount of isocyanate theoretically required for reacting with the amount of isocyanate reactive hydrogen from said polyether polyols used in a formulation.

It should be observed that the isocyanate index as used herein is considered from the point of view of the actual polymerisation process preparing the material involving the isocyanate and the polyether polyol. Any isocyanate groups consumed in a preliminary step to produce modified polyisocyanates (including such isocyanate-derivatives referred to in the art as prepolymers) are not taken into account in the calculation of the isocyanate index. Only the free isocyanate groups and the free isocyanate-reactive hydrogens (of said polyether polyols) present at the actual polymerisation stage are taken into account.

2) The expression "isocyanate-reactive hydrogen atoms" as used herein for the purpose of calculating the isocyanate index refers to the total of active hydrogen atoms in hydroxyl groups present in the polyether polyol; this means that for the purpose of calculating the isocyanate index at the actual polymerisation process one hydroxyl group is considered to comprise one reactive hydrogen.

3) The expression "polyisocyanurate" as used herein refers to cellular or non-cellular products as obtained by reacting the mentioned polyisocyanates and polyether polyols in the presence of trimerization catalysts at a high index, optionally using foaming agents, and in particular includes cellular products obtained with water as reactive foaming agent (involving a reaction of water with isocyanate groups yielding urea linkages and carbon dioxide and producing polyurea-polyisocyanurate-polyurethane foams).

4) The term "average nominal hydroxyl functionality" is used herein to indicate the number average functionality (number of hydroxyl groups per molecule) of the polyol or polyol composition on the assumption that this is the number average functionality (number of active hydrogen atoms per molecule) of the initiator(s) used in their preparation.

5) The word "average" refers to number average unless indicated otherwise.

6) Trimerisation catalyst: a catalyst enhancing the formation of polyisocyanurate groups from polyisocyanates.

The polyisocyanate may be chosen from aliphatic, cycloaliphatic, araliphatic and, preferably, aromatic polyisocyanates, such as toluene diisocyanate in the form of its 2,4 and 2,6-isomers and mixtures thereof, diphenylmethane diisocyanates and variants thereof, and mixtures of diphenylmethane diisocyanates (MDI) and oligomers thereof having an isocyanate functionality greater than 2 known in the art as "crude" or polymeric MDI (polymethylene polyphenylene polyisocyanates). Mixtures of toluene diisocyanate, diphenylmethane diisocyanates and/or polymethylene polyphenylene polyisocyanates may be used as well.

Preferably the polyisocyanate consists of a) 70-100% and more preferably 80-100% by weight of diphenylmethane diisocyanate comprising at least 40%, preferably at least 60% and most preferably at least 85% by weight of 4,4'-diphenylmethane diisocyanate and/or a variant of said diphenylmethane diisocyanate which variant has an NCO value of at least 20% by weight (polyisocyanate a), and b) 30-0% and more preferably 20-0% by weight of another polyisocyanate (polyisocyanate b).

Preferably this polyisocyanate a) is selected from 1) a diphenylmethane diisocyanate comprising at least 40%, preferably at least 60% and most preferably at least 85% by weight of 4,4'-diphenylmethane diisocyanate and the following preferred variants of such diphenylmethane diisocyanate: 2) a carbodiimide and/or uretonimine modified variant of polyisocyanate 1), the variant having an NCO value of 20% by weight or more; 3) a urethane modified variant of polyisocyanate 1), the variant having an NCO value of 20% by weight or more and being the reaction product of an excess of polyisocyanate 1) and of a polyol having an average nominal hydroxyl functionality of 2-4 and an average molecular weight of at most 1000; 4) a prepolymer having an NCO value of 20% by weight or more and which is the reaction product of an excess of any of the aforementioned polyisocyanates 1-3) and of a polyol having an average nominal functionality of 2-6, an average molecular weight of 2000-12000 and preferably an hydroxyl value of 15 to 60 mg KOH/g, and 5) mixtures of any of the aforementioned polyisocyanates. Polyisocyanates 1) and 2) and mixtures thereof are preferred.

Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI. It is to be noted that the amount of 2,2'-MDI in the isomeric mixtures is rather at an impurity level and in general will not exceed 2% by weight, the remainder being 4,4'-MDI and 2,4'-MDI. Polyisocyanates as these are known in the art and commercially available; for example Suprasec™ 1306 ex Huntsman. The carbodiimide and/or uretonimine modified variants of the above polyisocyanate 1) are also known in the art and commercially available; e.g. Suprasec 2020, ex Huntsman. Urethane modified variants of the above polyisocyanate 1) are also known in the art, see e.g. The ICI Polyurethanes Book by G. Woods 1990, 2nd edition, pages 32-35. Aforementioned prepolymers of polyisocyanate 1) having an NCO value of 20% by

3

weight or more are also known in the art. Preferably the polyol used for making these prepolymers is selected from polyester polyols and polyether polyols and especially from polyoxyethylene polyoxypropylene polyols having an average nominal functionality of 2-4, an average molecular weight of 2500-8000, and preferably an hydroxyl value of 15-60 mg KOH/g and preferably either an oxyethylene content of 5-25% by weight, which oxyethylene preferably is at the end of the polymer chains, or an oxyethylene content of 50-90% by weight, which oxyethylene preferably is randomly distributed over the polymer chains.

Mixtures of the aforementioned polyisocyanates may be used as well, see e.g. The ICI Polyurethanes Book by G. Woods 1990, 2nd edition pages 32-35. An example of such a commercially available polyisocyanate is Suprasec 2021 ex Huntsman.

The other polyisocyanate b) may be chosen from aliphatic, cycloaliphatic, araliphatic and, preferably, aromatic polyisocyanates, such as toluene diisocyanate in the form of its 2,4 and 2,6-isomers and mixtures thereof and oligomers of diphenylmethane diisocyanate (MDI) having an isocyanate functionality greater than 2. Mixtures of MDI and these oligomers are known in the art as "crude" or polymeric MDI (polymethylene polyphenylene polyisocyanates). Mixtures of toluene diisocyanate and polymethylene polyphenylene polyisocyanates may be used as well.

When polyisocyanates are used which have an NCO functionality of more than 2, the amount of such polyisocyanate used is such that the average NCO functionality of the total polyisocyanate used in the present invention is 2.0-2.2 preferably. The polyisocyanates used in the present invention preferably are liquid at 25 °C.

The polyether polyol used has an average equivalent weight of 100 - 2500, an oxyethylene content of at least 65 % by weight (on the weight of the polyether polyol) and preferably a primary hydroxyl group content of at least 40 % and more preferably of at least 65 % (calculated on the number of primary and secondary hydroxyl groups) and preferably an average nominal hydroxyl functionality of 2-8 and more preferably of 2-4. They may contain other oxyalkylene groups like oxypropylene and/or oxybutylene.

Mixtures of these polyols may be used. No other polyols or other isocyanate-reactive compounds having an average equivalent weight of 100-2500 are used preferably.

Such polyols are known in the art and commercially available; examples are Caradol™ 3602 from Shell, Daltocel™ F526, F442, F444 and F555 and Jeffox™ WL 440 and WL 1400 from Huntsman.

Any compound that catalyses the isocyanate trimerisation reaction (isocyanurate-formation) can be used as trimerisation catalyst in the process according to the present invention, such as tertiary amines, triazines and most preferably metal salt trimerisation catalysts.

Examples of suitable metal salt trimerisation catalysts are alkali metal salts of organic carboxylic acids. Preferred alkali metals are potassium and sodium, and preferred carboxylic acids are acetic acid and 2-ethylhexanoic acid.

Most preferred metal salt trimerisation catalysts are potassium acetate (commercially available as Polycat 46 from Air Products and Catalyst LB from Huntsman and potassium 2-ethylhexanoate (commercially available as Dabco K15 from Air Products). Two or more different trimerisation catalysts can be used in the process of the present invention.

The metal salt trimerisation catalyst is generally used in an amount of 0.01-5% by weight based on the weight of the polyisocyanate and the polyether polyol, preferably 0.05-3% by weight. It may occur that the polyisocyanate and/or the polyether polyol used in the process according to the present invention still contains metal salt from its preparation which may then be used as the trimerisation catalyst or as part of the trimerisation catalyst.

The relative amounts of the polyisocyanate and the polyether polyol having an average equivalent weight of 100-2500 are such that the index is 150-10000 and preferably 250-9000.

The polyisocyanate, the polyether polyol and the trimerization catalyst may be combined with the to-be-bonded material in any order. Preferably the polyisocyanate is combined with the to-be-bonded material before or together with the polyether polyol, the trimerization catalyst having been added to the polyisocyanate, the polyol or both. More preferably the polyisocyanate, the polyol and the trimerization catalyst are combined in an initial step so as to form a reactive binder composition, which in a next step is combined with the to-be-bonded material. The preparation of the reactive binder composition may be done by combining and mixing the polyisocyanate, the polyether polyol and the catalyst in any order, preferably at an initial temperature between 5 °C and 40 °C and more preferably between 10 °C and 30 °C. Preferably the polyol and the catalyst are combined and mixed first, followed by combining and mixing with the polyisocyanate. The combining and mixing of the ingredients for the reactive binder composition is generally conducted at ambient pressure and for a time and with equipment which ensures proper mixing. In general mixing with a traditional mixer for 5 seconds up to 5 minutes will be sufficient for achieving this. As mentioned before, the catalyst may already be present in the polyisocyanate and/or the polyether polyol in a sufficient amount. In that case only the polyisocyanate and the polyether polyol need to be combined and mixed.

This reactive binder composition is subsequently combined with a to-be-bonded material to form a reactive composite. Surprisingly this reactive composite has a low reactivity at ambient conditions; it may be stored at lower temperatures.

The to-be-bonded material may have any size and shape. The to-be-bonded materials preferably are solid materials at room temperature. Examples of materials which may be used arc:

- wood chips, wood dust, wood flakes, wooden plates;
- paper and cardboard, both shredded or layered;
- sand, vermiculite, clay, cement and other silicates;
- ground rubber, ground thermoplastics, ground thermoset materials;
- honey combs of any material, like cardboard, aluminium, wood and plastics;
- metal particles and plates;
- cork in particulate form or in layers;
- natural fibers, like flax, hemp and sisal fibers;
- synthetic fibers, like polyamide, polyolefin, polyaramide, polyester and carbon fibers;
- mineral fibers, like glass fibers and rock wool fibers;
- mineral fillers like $BaSO_4$ and $CaCO_3$;
- nanoparticles, like clays, inorganic oxides and carbons;
- glass beads, ground glass, hollow glass beads;
- expanded or expandable beads, like Expancel™ beads or similar microspheres;
- untreated or treated waste, like milled, chopped, crushed or ground waste and in particular fly ash;
- woven and non-woven textiles; and
- combinations of two or more of these materials.

The combining of the reactive binder composition and the to-be-bonded material preferably is conducted at an initial temperature of 5-40°C and ambient pressure and may be conducted by coating, impregnating, laminating, pouring, kneading, calendering, extruding, mixing and spraying of the binder composition and combinations thereof and/or any other suitable way which ensures thorough contact between the reactive binder composition and the to-be-bonded material.

The amount of the reactive binder composition is 1-60 and preferably 1-40 % by weight and the amount of the to-be-bonded material is 40-99 and preferably 60-99 % by weight, both calculated on the amount of reactive binder composition plus the amount of to-be-bonded material.

Surprisingly it was found that the reactive composite is relatively stable at room temperature and at lower temperatures. It was found that it hardly reacts at room temperature and could still be manipulated after e.g. 8 hours and if cooled even after longer periods. Therefore the present invention further is related to a reactive composite which is a combination of 1-60 % by weight of a reactive binder composition and 40-99 % by weight of a to-be-bonded material, both calculated on the amount of this composition and of this material, wherein the composition comprises a polyisocyanate, a polyether polyol and a trimerization catalyst, wherein the amount of the polyisocyanate and the polyol is such that the index in the binder composition is 150-10000, characterized in that the polyol is a polyol having an average equivalent weight of 100-2500 and an oxyethylene content of at least 65 % by weight. Preferably this reactive composite is kept at a temperature of -50 °C to 10 °C and more preferably of -30 °C to 0°C.

Optionally additional ingredients may be used in the process like blowing agents e.g. water and pentane, catalysts enhancing the formation of urethane bonds like tin catalysts like tin octoate and dibutyltindilaurate, tertiary amine catalysts like triethylenediamine and imidazoles like dimethylimidazole and other catalysts like maleate esters and acetate esters; surfactants; fire retardants; smoke suppressants; UV-stabilizers; colorants; microbial inhibitors; plasticizers and internal mould release agents.
Still further isocyanate-reactive chain extenders and cross-linkers having an average equivalent weight below 100 may be used, like ethylene glycol, diethylene glycol, propylene glycol, dipropylene glycol, butane diol, hexane diol, glycerol, trimethylol propane, sucrose and sorbitol. These chain extenders and cross-linkers preferably are not used or only to the extent as necessary in view of the fact that commercial grades of catalyst may contain such chain extenders and/or cross linkers. If used these chain extenders and/or cross linkers are not taken into account in calculating the aforementioned index: additional polyisocyanate is to be used to compensate for the active hydrogens in these chain extenders and cross-linkers.

The optional ingredients may be added to any of the ingredients used in the process of the present invention and/or to the reactive binder composition and/or to the reactive composite.

The optional ingredients are preferably added to the polyether polyol or to the reactive binder composition. The optional ingredients are used in small amounts; the total amount generally does not exceed 10 % by weight of the reactive composite and preferably less than 5 and most preferably less than 2 % by weight of the reactive composite.

Once the reactive composite has been prepared, the temperature is elevated; the reactive composite is allowed to react at a temperature between 50 °C and 200 °C and preferably between 80 °C and 150 °C. This reaction normally takes between 10 seconds and 1 hour and preferably between 15 seconds and 30 minutes. The process may be conducted at ambient pressure but preferably is conducted at elevated pressure, preferably a pressure of 0.1-100 MPa above atmospheric pressure, like in a mould or a laminator.
The reactive composite may be made outside the mould and subsequently be put in the mould, followed by closing and heating the mould and allowing the reactive composite to react so as to form the polyisocyanurate composite. Alternatively the reactive composite may be made in the mould by combining the reactive binder composition and the to-be-bonded material in the mould to form the reactive composite and then to close the mould and elevate the temperature or elevate the temperature and close the mould. The reactive composite may be applied onto a backing outside or inside the mould or a cover may be applied onto the reactive composite or both a backing and a cover may be applied in which case a sandwich composite is obtained. The backing and the cover may be the same or different materials. The reactive composite may be applied onto both sides of a backing. Another way of making such backed composites is to apply the to-be-bonded material onto the backing followed by combining the reactive binder composition with the to-be-bonded material e.g. by spraying.

The moulding may be conducted according to the cast moulding process, the compression moulding process, the resin transfer moulding process, especially the vacuum assisted one, the resin infusion process, the prepregging process and the hand lay-up process. The process further may be conducted according to an extrusion or a pultrusion process. Microwave curing may also be applied. The process may be conducted batch-wise, semi-continuously or continuously.

The present invention is illustrated with the following examples.

Example 1

90 parts by weight (pbw) of Suprasec 2015, a polyisocyanate based on MDI according to the present invention comprising about 12 % by weight of oligomers having 3 or more isocyanate groups, 10 parts by weight of Daltocel F526, a polyoxyethylene polyol, and 0.3 pbw of catalyst LB were combined and mixed at room temperature.
10 parts by weight of the reactive binder composition so obtained were combined and hand-mixed with 90 pbw of to-be-bonded material at room temperature. In Table 1 the to-be-bonded materials used are indicated.
The reactive composite so formed was transferred to a mould (10x10x10cm) which was treated with external mould release agent (the mould was completely filled with reactive composite). The mould temperature was 140 °C.
The mould was closed and the reactive composite was allowed to react for 10 minutes. After opening the mould, a nice piece of polyisocyanurate composite was demoulded.

|  | Table 1 |
| --- | --- |
| Example | To-be-bonded material |
| 1a | sand |
| 1b | cement |
| 1c | sand/gravel (1/2, w/w) |
| 1d | wood fibers |
| 1e | granulate rubber |
| 1 f | ground rigid PU foam scrap |

Example 2

Example 1 was repeated with the proviso that a mould was used having a length and width of 20.2 x 20.2 cm, that 1260g of a reactive composite was transferred to the mould, that the mould temperature was 80 °C and that pressure was applied so as to give a material thickness of 24.5 mm. After 5 minutes a nice polyisocyanurate composite was demoulded.
The reactive composite contained 65 %w cement, 20 %w small wood fibers, 5 %w cork crumbs and 10 %w of reactive binder.

Example 3

Example 2 was repeated with the proviso that the reactive composite contained 20 %w of small wood fibers, 70 %w of cement and 10 %w of reactive binder composition.

Example 4

A card board honey comb having a thickness of 7 mm was at both sides provided with a glass mat of 200g. The reactive binder composition of example 1 was sprayed onto both glass mats (200g). The reactive composite was placed in a mould (mould temperature 80 °C). 1 minute after closure of the mould a nice polyisocyanurate composite was demoulded.

Example 5

Reactive binder compositions were made by hand mixing under ambient conditions a polyisocyanate a polyol and if necessary trimerization catalyst in such amounts that the index in the reactive binder composition was 675 and that the catalyst loading was the same. 40 parts by weight of this composition was hand mixed with 60 parts by weight of BaSO$_4$ under ambient conditions and allowed to stand.
After 800 seconds the temperature of the mixture was as indicated in below Table.

Table

|  | T after 800 seconds, °C |
|---|---|
| EO-polyol MDI | 104 |
| EO-polyol polymeric MDI | 48 |
| PO-polyol MDI | 29 |
| PO-polyol polymeric MDI | 27 |

Chemicals used:

| | |
|---|---|
| EO-polyol : | Daltocel F526, ex Huntsman (containing sufficient trimerization Catalyst) |
| PO-polyol : | Daltolac™R251, ex Huntsman |
| MDI : | Suprasec 2015, ex Huntsman |
| Polymeric MDI : | Suprasec 5025, ex Huntsman (the amount of oligomers having 3 or more isocyanate groups is about 58 % by weight). |
| Trimerisation catalyst: | catalyst LB; was added to the PO-polyol in such an amount that the catalyst level was the same as in the EO systems. |

**Claims**

1.  Process for making a polyisocyanurate composite which process comprises combining a polyisocyanate, a polyether polyol and a trimerization catalyst, these three ingredients collectively being referred to as 'reactive binder composition', with a to-be-bonded material to form a reactive composite, and allowing in a next step this reactive composite to react at elevated temperature, wherein the amount of the reactive binder composition is 1 - 60 % by weight and the amount of the to-be-bonded material is 40 - 99 % by weight, both calculated on the amount of the reactive binder composition plus the amount of the to-be-bonded material, and wherein the amount of the polyisocyanate and the polyol is such that the index of the reactive binder composition is 150 - 10000, **characterized in that** the polyol is a polyol having an average equivalent weight of 100 - 2500 and an oxyethylene content of at least 65 % by weight.

2.  Process according to claim 1, **characterized in that** the combining of the polyisocyanate, the polyether polyol, the trimerization catalyst and the to-be-bonded material is conducted at an initial temperature between 5 °C and 40 °C.

3.  Process according to claims 1-2, **characterized in that** the reactive composite is allowed to react at a temperature between 50 °C and 200 °C.

4.  Process according to claims 1-3, **characterized in that** the polyisocyanate consists of a) 70-100% by weight of diphenylmethane diisocyanate comprising at least 40 % by weight of 4,4'-diphenylmethane diisocyanate and/or a variant of said diphenylmethane diisocyanate which variant has an NCO value of at least 20 % by weight and b) 30-0 % by weight of another polyisocyanate.

5.  Process according to claims 1-4, **characterized in that** the polyether polyol has a primary hydroxyl group content of at least 40 %.

**6.** Process according to claims 1-5, **characterized in that** the reactive composite is allowed to react at a temperature between 80°C and 150°C.

**7.** Process according to claims 1-6, **characterized in that** the amount of reactive binder composition is 1-40% by weight and the amount of the to-be-bonded material is 60-99% by weight, both calculated on the amount of the reactive binder composition plus the amount of the to-be-bonded material,

**8.** Reactive composite which is a combination of 1-60 % by weight of a reactive binder composition and 40-99 % by weight of a to-be-bonded material, both calculated on the amount of this composition and of this material, wherein the composition comprises a polyisocyanate, a polyether polyol and a trimerization catalyst, wherein the amount of the polyisocyanate and the polyol is such that the index in the binder composition is 150-10000, **characterized in that** the polyol is a polyol having an average equivalent weight of 100-2500 and an oxyethylene content of at least 65 % by weight.

**9.** Reactive composite according to claim 8, **characterized in that** the polyisocyanate consists of a) 70-100 % by weight of diphenylmethane diisocyanate comprising at least 40 % by weight of 4,4'-diphenylmethane diisocyanate and/or a variant of said diphenylmethane diisocyanate which variant has an NCO value of at least 20 % by weight and b) 30-0 % by weight of another polyisocyanate.

**10.** Reactive composite according to claims 8-9, **characterized in that** the polyether polyol has a primary hydroxyl group content of at least 40 %.

**11.** Reactive composite according to claims 8-10, which is kept at a temperature of -50 °C to 10 °C.

**12.** Reactive composite according to claims 8-11, which is kept at a temperature of -30 °C to 0 °C.

**13.** Reactive composite according to claims 8-12, **characterized in that** the amount of reactive binder composition is 1-40% by weight and the amount of the to-be-bonded material is 60-99% by weight, both calculated on the amount of the reactive binder composition plus the amount of the to-be-bonded material.

**14.** Composite made according to the process of claims 1-7.

**15.** Composite made from the reactive composite according to claims 8-13.

**Patentansprüche**

**1.** Verfahren zur Herstellung eines Polyisocyanurat-Verbundstoffs, wobei das Verfahren Kombinieren eines Polyisocyanats, eines Polyetherpolyols und eines Trimerisierungskatalysators, wobei diese drei Ingredienzien zusammen als "reaktive Bindemittelzusammensetzung" bezeichnet werden, mit einem zu bindenden Material unter Bildung eines reaktiven Verbundstoffs und im nächsten Schritt Reagierenlassen dieses reaktiven Verbundstoffs bei erhöhter Temperatur umfasst, wobei die Menge der reaktiven Bindemittelzusammensetzung 1-60 Gewichts-% ist und die Menge des zu bindenden Materials 40-99 Gewichts-% ist, beide unter Bezug auf die Menge der reaktiven Bindemittelzusammensetzung plus der Menge des zu bindenden Materials berechnet, und wobei die Menge des Polyisocyanats und des Polyols so ist, dass der Index der reaktiven Bindemittelzusammensetzung 150-10000 ist, **dadurch gekennzeichnet, dass** das Polyol ein Polyol ist, das ein durchschnittliches Äquivalentgewicht von 100-2500 und einen Oxyethylengehalt von wenigstens 65 Gewichts-% hat.

**2.** Verfahren nach Anspruch 1, **dadurch gekennzeichnet, dass** das Kombinieren des Polyisocyanats, des Polyetherpolyols, des Trimerisierungskatalysators und des zu bindenden Materials bei einer Anfangstemperatur zwischen 5 °C und 40 °C durchgeführt wird.

**3.** Verfahren nach den Ansprüchen 1-2, **dadurch gekennzeichnet, dass** der reaktive Verbundstoff bei einer Temperatur zwischen 50 °C und 200 °C reagieren gelassen wird.

**4.** Verfahren nach den Ansprühen 1-3, **dadurch gekennzeichnet, dass** das Polyisocyanat aus a) 70-100 Gewichts-% Diphenylmethandiisocyanat, das wenigstens 40 Gewichts-% 4,4'-Diphenylmethandiisocyanat und/oder einer Variante des Diphenylmethandiisocyanats, wobei die Variante einen NCO-Wert von wenigstens 20 Gewichts-% hat, umfasst, und b) 30-0 Gewichts-% anderem Polyisocyanat besteht.

5. Verfahren nach den Ansprüchen 1-4, **dadurch gekennzeichnet, dass** das Polyetherpolyol einen Gehalt an primärer Hydroxylgruppe von wenigstens 40 % hat.

6. Verfahren nach den Ansprüchen 1-5, **dadurch gekennzeichnet, dass** der reaktive Verbundstoff bei einer Temperatur zwischen 80 °C und 150 °C reagieren gelassen wird.

7. Verfahren nach den Ansprüchen 1-6, **dadurch gekennzeichnet, dass** die Menge an reaktiver Bindemittelzusammensetzung 1-40 Gewichts-% ist und die Menge des zu bindenden Materials 60-99 Gewichts-% ist, beide unter Bezug auf die Menge der reaktiven Bindemittelzusammensetzung plus der Menge des zu bindenden Materials errechnet.

8. Reaktiver Verbundstoff, der eine Kombination aus 1-60 Gewichts-% einer reaktiven Bindemittelzusammensetzung und 40-99 Gewichts-% eines zu bindenden Materials ist, beide unter Bezug auf die Menge dieser Zusammensetzung und dieses Materials berechnet, ist, wobei die Zusammensetzung ein Polyisocyanat, ein Polyetherpolyol und einen Trimerisierungskatalysator umfasst, wobei die Menge des Polyisocyanats und des Polyols so ist, dass der Index in der Bindemittelzusammensetzung 150-10000 ist, **dadurch gekennzeichnet, dass** das Polyol ein Polyol ist, das ein durchschnittliches Äquivalentgewicht von 100-2500 und einen Oxyethylengehalt von wenigstens 65 Gewichts-% hat.

9. Reaktiver Verbundstoff gemäß Anspruch 8, **dadurch gekennzeichnet, dass** das Polyisocyanat aus a) 70-100 Gewichts-% Diphenylmethandiisocyanat, das wenigstens 40 Gewichts-% 4,4'-Diphenylmethandiisocyanat und/oder einer Variante des Diphenylmethandiisocyanats, wobei die Variante einen NCO-Wert von wenigstens 20 Gewichts-% hat, umfasst, und b) 30-0 Gewichts-% anderem Polyisocyanat besteht.

10. Reaktiver Verbundstoff gemäß den Ansprüchen 8-9, **dadurch gekennzeichnet, dass** das Polyetherpolyol einen Gehalt an primärer Hydroxylgruppe von wenigstens 40 % hat.

11. Reaktiver Verbundstoff gemäß den Ansprüchen 8-10, der bei einer Temperatur von -50 °C bis 10 °C gehalten wird.

12. Reaktiver Verbundstoff gemäß den Ansprüchen 8-11, der bei einer Temperatur von -30 °C bis 0 °C gehalten wird.

13. Reaktiver Verbundstoff gemäß den Ansprüchen 8-12, **dadurch gekennzeichnet, dass** die Menge an reaktiver Bindemittelzusammensetzung 1-40 Gewichts-% ist und die Menge des zu bindenden Materials 60-99 Gewichts-% ist, beide unter Bezug auf die Menge der reaktiven Bindemittelzusammensetzung plus der Menge des zu bindenden Materials berechnet.

14. Verbundstoff, hergestellt nach dem Verfahren gemäß den Ansprüchen 1-7.

15. Verbundstoff, hergestellt aus dem reaktiven Verbundstoff gemäß den Ansprüchen 8-13.

**Revendications**

1. Procédé pour préparer un composite de polyisocyanurate, procédé qui comprend la combinaison d'un polyisocyanate, d'un polyéther-polyol et d'un catalyseur de trimérisation, ces trois ingrédients étant désignés collectivement sous le nom de "composition de liant réactif", avec une matière à lier pour former un composite réactif, et à laisser dans une étape suivante ce composite réactif réagir à une température élevée, dans lequel la quantité de la composition de liant réactif est de 1 à 60 % en poids et la quantité de la matière à lier est de 40 à 99 % en poids, ces deux quantités étant calculées sur la base de la quantité de la composition de liant réactif plus la quantité de la matière à lier, et dans lequel la quantité du polyisocyanate et du polyol est telle que l'indice de la composition de liant réactif soit de 150 à 10 000, **caractérisé en ce que** le polyol est un polyol ayant un poids équivalent moyen de 100 à 2500 et une teneur en oxyéthylène d'au moins 65 % en poids.

2. Procédé suivant la revendication 1, **caractérisé en ce que** la combinaison du polyisocyanate, du polyéther-polyol, du catalyseur de trimérisation et de la matière à lier est effectuée à une température initiale comprise entre 5°C et 40°C.

**3.** Procédé suivant les revendications 1 et 2, **caractérisé en ce que** le composite réactif est laissé en réaction à une température comprise entre 50°C et 200°C.

**4.** Procédé suivant les revendications 1 à 3, **caractérisé en ce que** le polyisocyanate consiste en a) 70 à 100 % en poids de diphénylméthane-diisocyanate comprenant au moins 40 % en poids de 4,4-diphénylméthane-diisocyanate et/ou d'un variant dudit diphénylméthane-diisocyanate, variant qui a un indice de NCO d'au moins 20 % en poids, et b) 30 à 0 % en poids d'un autre polyisocyanate.

**5.** Procédé suivant les revendications 1 à 4, **caractérisé en ce que** le polyéther-polyol a une teneur en groupes hydroxyle primaires d'au moins 40 %.

**6.** Procédé suivant les revendications 1 à 5, **caractérisé en ce que** le composite réactif est laissé en réaction à une température comprise entre 80°C et 150°C.

**7.** Procédé suivant les revendications 1 à 6, **caractérisé en ce que** la quantité de composition de liant réactif est de 1 à 40 % en poids et la quantité de la matière à lier est de 60 à 99 % en poids, ces deux quantités étant calculées sur la base de la quantité de la composition de liant réactif plus la quantité de la matière à lier.

**8.** Composite réactif qui est une combinaison de 1 à 60 % en poids d'une composition de liant réactif et de 40 à 99 % en poids d'une matière à lier, ces deux quantités étant calculées sur la base de la quantité de cette composition et de cette matière, dans lequel la composition comprend un polyisocyanate, un polyéther-polyol et un catalyseur de trimérisation, dans lequel la quantité du polyisocyanate et du polyol est telle que l'indice dans la composition de liant est de 150 à 10 000, **caractérisé en ce que** le polyol est un polyol ayant un poids équivalent moyen de 100 à 2500 et une teneur en oxyéthylène d'au moins 65 % en poids.

**9.** Composite réactif suivant la revendication 8, **caractérisé en ce que** le polyisocyanate consiste en a) 70 à 100 % en poids de diphénylméthane-diisocyanate comprenant au moins 40 % en poids de 4,4-diphénylméthane-diisocyanate et/ou d'un variant dudit diphénylméthane-diisocyanate, variant qui a un indice de NCO d'au moins 20 % en poids, et b) 30 à 0 % en poids d'un autre polyisocyanate.

**10.** Composite réactif suivant les revendications 8 et 9, **caractérisé en ce que** le polyéther-polyol a une teneur en groupes hydroxyle primaires d'au moins 40 %.

**11.** Composite réactif suivant les revendications 8 à 10, qui est maintenu à une température de -50°C à 10°C.

**12.** Composite réactif suivant les revendications 8 à 11, qui est maintenu à une température de -30°C à 0°C.

**13.** Composite réactif suivant les revendications 8 à 12, **caractérisé en ce que** la quantité de composition de liant réactif est de 1 à 40 % en poids et la quantité de la matière à lier est de 60 à 99 % en poids, ces deux quantités étant calculées sur la base de la quantité de la composition de liant réactif plus la quantité de la matière à lier.

**14.** Composite préparé par le procédé suivant les revendications 1 à 7.

**15.** Composite préparé à partir du composite réactif suivant les revendications 8 à 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006008780 A
- JP 58034832 A
- JP 58145431 A
- JP 58011529 A
- JP 571331276 B
- US 4129697 A
- US 4126742 A
- EP 226176 A
- WO 05072188 A
- US 6509392 B
- EP 304005 A
- WO 04111101 A
- US 20020045690 A

**Non-patent literature cited in the description**

- **G. Woods.** The ICI Polyurethanes Book. 1990, 32-35